# EUROPEAN PATENT APPLICATION

(11) **EP 4 746 182 A1**
(43) Date of publication of application: **20.05.2026**
(21) Application number: 24854489.2
(22) Date of filing: 16.08.2024
(51) Int. Cl.: H01M 50/536, H01M 50/533, H01M 50/54

(54) **ELECTRODE ASSEMBLY, SECONDARY BATTERY COMPRISING ELECTRODE ASSEMBLY, AND ELECTRODE ASSEMBLY MANUFACTURING METHOD**

(30) Priority: 17.08.2023 KR 20230107661
(71) Applicant: LG Energy Solution, Ltd., Seoul 07335 (KR)
(72) Inventor: KANG, Gyung Soo, Daejeon 34122 (KR); LEE, Hyo Seo, Daejeon 34122 (KR)
(74) Representative: Hoffmann Eitle
(86) International application number: PCT/KR2024/012237
(87) International publication number: WO 2025/037938

(57) **Abstract**

The present invention relates to an electrode assembly, a secondary battery comprising the electrode assembly, and an electrode assembly manufacturing method. The electrode assembly according to the present invention comprises: an electrode stack formed from a plurality of alternately stacked electrodes and separators; and electrode leads electrically connected to the electrode stack, wherein: the electrode includes an electrode current collector including an electrode tab that extends from an end portion thereof; the electrode current collector includes a polymer layer and metal layers, each stacked on one of two surfaces of the polymer layer in the stacking direction; the electrode tabs of the electrode current collectors respectively provided in the plurality of electrodes form tab stacks that are gathered together, and further include metal clips that surround end portions of the tab stacks; and the electrode leads are connected to one-side portions of the metal clips so as to be electrically connected to the electrode stack.

## Description

### TECHNICAL FIELD

### CROSS-REFERENCE TO RELATED APPLICATIONS

The present application claims priority to Korean Patent Application No. 10-2023-0107661 filed on August 17, 2023 in the Republic of Korea, the disclosures of which are incorporated herein by reference.

### TECHNICAL FIELD

The present disclosure relates to an electrode assembly, a secondary battery including the electrode assembly, and a method for manufacturing the electrode assembly.

### BACKGROUND ART

Secondary batteries are rechargeable unlike primary batteries, and have been heavily researched and developed in recent years due to their potential for miniaturization and large capacity. As the technology development and demand for electric vehicles, energy storage systems (ESSs), mobile devices, and the like increase, the demand for secondary batteries as an energy source is rapidly increasing. However, the safety of secondary batteries is not keeping up with the pace of technological advancement. To solve this problem, there is a method for improving safety by creating an electrical short before the abnormal behavior of secondary batteries to drain energy or by short-circuiting the electrical connection.

Secondary batteries are classified into coin type batteries, cylindrical batteries, prismatic batteries, and pouch type batteries depending on the shape of a battery case. In a secondary battery, the electrode assembly mounted inside the battery case is a power generating element that can be charged and discharged with a stacked structure of electrodes and separators.

The electrode assembly may be roughly classified into a jelly-roll type in which a sheet-like positive electrode and negative electrode where an active material is applied to a current collector having a separator interposed therebetween are wound, a stack type in which multiple positive electrodes and negative electrodes are sequentially stacked with a separator interposed therebetween, and a stack/folding type in which the stack-type unit cells are wound with a long separation film.

### SUMMARY

### TECHNICAL PROBLEM

The present disclosure is directed to providing an electrode assembly having improved weldability, a secondary battery including the electrode assembly, and a method for manufacturing the electrode assembly.

### TECHNICAL SOLUTION

An electrode assembly according to an embodiment of the present disclosure may include an electrode stack in which multiple electrodes and separators are alternately stacked; and an electrode lead electrically connected to the electrode stack, wherein the electrode may include an electrode current collector including an electrode tab extending at an end, and the electrode current collector may include a polymer layer and metal layers laminated on each of both surfaces of the polymer layer in the stacking direction, wherein the electrode tabs of the electrode current collectors provided on each of the multiple electrodes may be collected together to form a tab stack, and the electrode assembly may further include a metal clip surrounding the end of the tab stack, wherein the electrode lead may be electrically connected to the electrode stack by being connected to one side of the metal clip.

Additionally, a secondary battery according to an embodiment of the present disclosure may include an electrode assembly and a battery case accommodating the electrode assembly, wherein the electrode assembly may include an electrode stack in which multiple electrodes and separators are alternately stacked; and an electrode lead electrically connected to the electrode stack, wherein the electrode may include an electrode current collector including an electrode tab extending at an end, and the electrode current collector may include a polymer layer and metal layers laminated on each of both surfaces of the polymer layer in the stacking direction, wherein the electrode tabs of the electrode current collectors provided on each of the multiple electrodes may be collected together to form a tab stack, and the electrode assembly may further include a metal clip surrounding the end of the tab stack, wherein the electrode lead may be electrically connected to the electrode stack by being connected to one side of the metal clip.

In addition, a method for manufacturing the electrode assembly according to an embodiment of the present disclosure may include a current collector formation step of forming an electrode current collector, including a lamination process for laminating metal layers on both surfaces of a polymer layer to form a current collector stack; and a tab formation process for notching an end portion of the current collector stack to form an electrode tab; an electrode stack formation step of alternately stacking multiple electrodes including the electrode current collector and separators to form an electrode stack; a tab collection step of forming a tab stack by collecting the electrode tabs of the electrode current collectors provided on each of the multiple electrodes; a lead connection step of connecting an electrode lead to one surface of a metal sheet; and a folding step of forming a metal clip by folding the metal sheet so that the other surface of the metal sheet surrounds the end of the tab stack.

### ADVANTAGEOUS EFFECTS

According to the present disclosure, the end of the tab stack in which the electrode tabs of the electrode current collector having metal layers laminated on both surfaces of the polymer layer are collected together is surrounded by the metal clip, and the electrode lead is connected to the metal clip, so that there is an effect of significantly improving weldability between the electrode tab and the electrode lead.

### BRIEF DESCRIPTION OF THE DRAWINGS

FIG. 1 is a cross-sectional view showing an electrode assembly according to an embodiment of the present disclosure.
FIG. 2 is a cross-sectional view showing an essential portion of an electrode assembly according to an embodiment of the present disclosure.
FIG. 3 is a perspective view showing an electrode current collector in an electrode assembly according to an embodiment of the present disclosure.
FIG. 4 is a cross-sectional view showing an electrode stack in an electrode assembly according to an embodiment of the present disclosure.
FIG. 5 is a cross-sectional view showing a first example of an electrode current collector in an electrode assembly according to an embodiment of the present disclosure.
FIG. 6 is a cross-sectional view showing a second example of an electrode current collector according to an embodiment of the present disclosure.
FIG. 7 is a cross-sectional view showing a third example of an electrode current collector according to an embodiment of the present disclosure.
FIG. 8 is a cross-sectional view showing a secondary battery including an electrode assembly according to an embodiment of the present disclosure.
FIG. 9 is a perspective view showing a lamination process in a method for manufacturing an electrode assembly according to an embodiment of the present disclosure.
FIG. 10 is a perspective view showing a tab formation process in a method for manufacturing an electrode assembly according to an embodiment of the present disclosure.
FIG. 11 is a cross-sectional view showing a tab collection step in a method for manufacturing an electrode assembly according to an embodiment of the present disclosure.
FIG. 12 is a cross-sectional view showing a lead connection step in a method for manufacturing an electrode assembly according to an embodiment of the present disclosure.
FIG. 13 is a cross-sectional view showing a seating step in a method for manufacturing an electrode assembly according to an embodiment of the present disclosure.
FIG. 14 is a cross-sectional view showing a folding step in a method for manufacturing an electrode assembly according to an embodiment of the present disclosure.
FIG. 15 is a cross-sectional view showing an example of a stamping step in a method for manufacturing an electrode assembly according to an embodiment of the present disclosure.
FIG. 16 is a cross-sectional view showing another example of a stamping step in a method for manufacturing an electrode assembly according to an embodiment of the present disclosure.

### DETAILED DESCRIPTION

The objectives, specific advantages, and novel features of the present disclosure will become more apparent from the following detailed description and preferred embodiments in connection with the accompanying drawings. It should be noted that in affixing the reference numerals to the elements in each drawing in this specification, the identical reference numerals are affixed to the identical elements as much as possible even if they are shown in different drawings. Additionally, the present disclosure may be embodied in many different forms and is not limited to the embodiments described herein. And, in describing the present disclosure, detailed descriptions of related known technologies that may unnecessarily obscure the gist of the present disclosure will be omitted.

### Electrode assembly according to embodiment

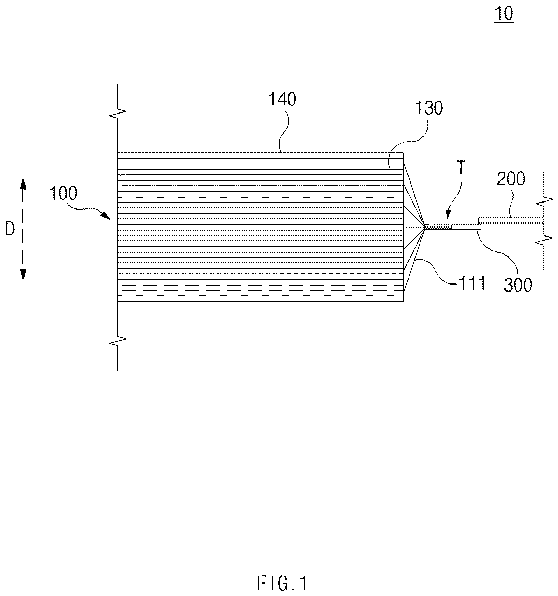

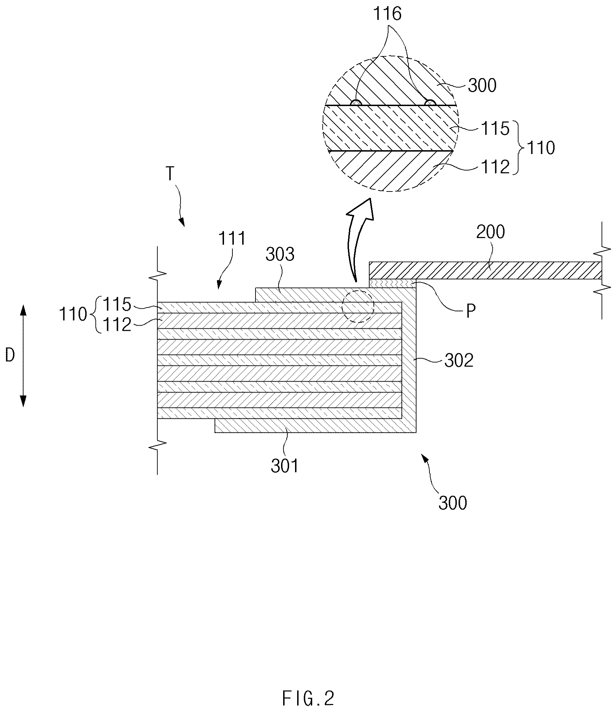

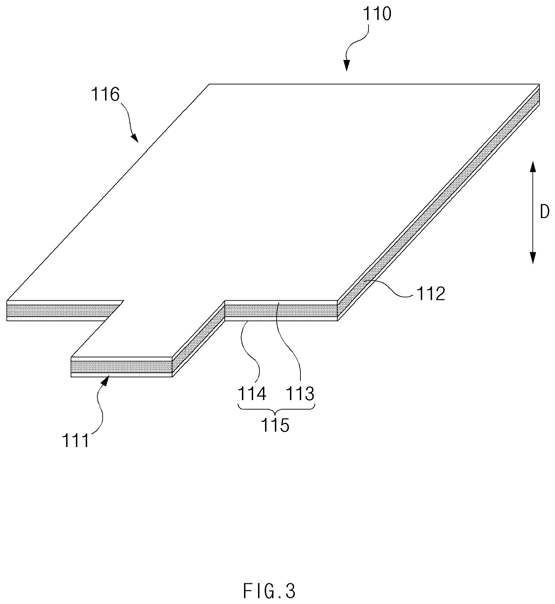

FIG. 1 is a cross-sectional view showing an electrode assembly according to an embodiment of the present disclosure, FIG. 2 is a cross-sectional view showing an essential portion of an electrode assembly according to an embodiment of the present disclosure, and FIG. 3 is a perspective view showing an electrode current collector in an electrode assembly according to an embodiment of the present disclosure.

Referring to FIGS. 1 to 3, the electrode assembly 10 according to an embodiment of the present disclosure includes an electrode stack 100 in which multiple electrodes 130 and separators 140 are alternately stacked, and an electrode lead 200 electrically connected to the electrode stack 100, wherein the electrode 130 includes an electrode current collector 110 including an electrode tab 111 extending at an end, and the electrode current collector 110 includes a polymer layer 112 and metal layers 115 laminated on each of both surfaces of the polymer layer 112 in the stacking direction D, wherein the electrode tabs 111 of the electrode current collectors 110 provided on each of the multiple electrodes 130 are collected together to form a tab stack T, and the electrode assembly 10 further includes a metal clip 300 surrounding the end of the tab stack T, wherein the electrode lead 200 is electrically connected to the electrode stack 100 by being connected to one side of the metal clip 300.

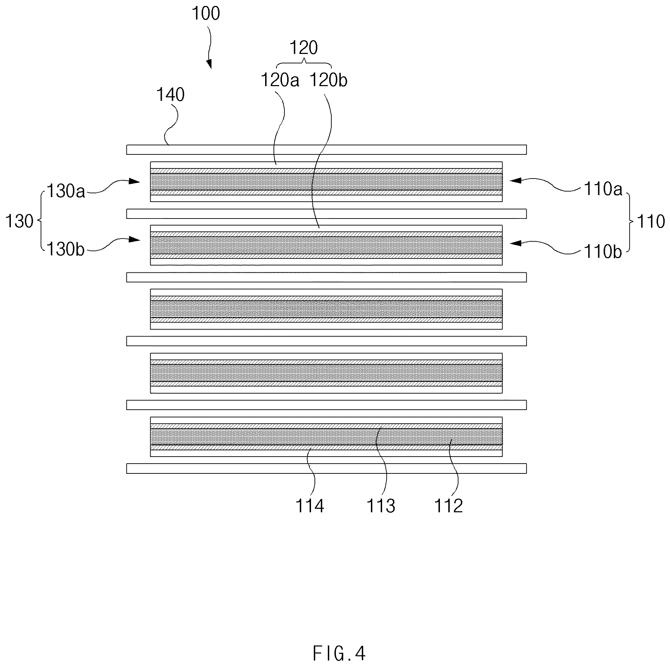

FIG. 4 is a cross-sectional view showing an electrode stack in an electrode assembly according to an embodiment of the present disclosure.

More specifically, referring to FIGS. 1 and 4, the electrode stack 100 is a power generating element that can be charged and discharged, in which multiple electrodes 130 and separators 140 are alternately stacked.

The electrode 130 includes an electrode current collector 110 including an electrode tab 111 extending at an end.

Here, the electrode 130 may include an electrode current collector 110 and an electrode active material 120 coated on one or both surfaces of the electrode current collector 110. In this case, the electrode 130 may be formed with a coated portion where the electrode active material 120 is coated on the electrode current collector 110 and an uncoated portion where the electrode active material 120 is not coated on the electrode current collector 110. In this case, an electrode tab 111 may be positioned in the uncoated portion of the electrode current collector 110.

Meanwhile, the electrode 130 may include a positive electrode 130a and a negative electrode 130b. And, the separator 140 separates the positive electrode 130a and the negative electrode 130b from each other to electrically insulate them.

The positive electrode 130a may include a positive electrode current collector 110a and a positive electrode active material 120a provided on one surface of the positive electrode current collector 110a. In this case, the positive electrode 130a may include a positive electrode uncoated portion, which is a region where the positive electrode active material 120a is not coated.

The positive electrode active material 120a may be made of lithium manganese oxide, lithium cobalt oxide, lithium nickel oxide, lithium iron phosphate, or a compound or mixture including one or more of these.

The negative electrode 130b may include a negative electrode current collector 110b and a negative electrode active material 120b provided on one surface of the negative electrode current collector 110b. In this case, the negative electrode 130b may include a negative electrode uncoated portion, which is a region where the negative electrode active material 120b is not coated.

The negative electrode active material 120b may be made of, for example, artificial graphite, lithium metal, lithium alloy, carbon, petroleum coke, activated carbon, graphite, silicon compound, tin compound, titanium compound, or an alloy thereof. In this case, the negative electrode active material 120b may further include, for example, non-graphite silica (SiO), silicon carbide (SiC), or the like.

Meanwhile, the positive electrode current collector 110a and the negative electrode current collector 110b may include a polymer layer 112 and a first metal layer 113 and a second metal layer 114 laminated on both surfaces of the polymer layer 112 in the stacking direction D.

In this case, the first metal layer 113 and the second metal layer 114 located on the positive electrode current collector 110a may include an aluminum material, and the first metal layer 113 and the second metal layer 114 located on the negative electrode current collector 110b may include a copper material.

Referring to FIG. 3, the electrode current collector 110 includes an electrode tab 111 extending at an end. That is, the electrode tab 111 may be formed by notching the end of the electrode current collector 110.

Additionally, the electrode current collector 110 includes a polymer layer 112 and metal layers 115 laminated on both surfaces of the polymer layer 112 in the stacking direction D. In this case, the metal layers 115 include the first metal layer 113 laminated on one surface of the polymer layer 112 and the second metal layer 114 laminated on the other surface F2 thereof.

Here, the polymer layer 112 is a layer including a polymer material, and the metal layers 115 are layers including a metal material. Therefore, the electrode current collector 110 is provided in a form where the first metal layer 113 and the second metal layer 114 are laminated on both surfaces of the polymer layer 112, which may prevent the occurrence of a fire due to excessive current density occurring when formed of only a metal material. In addition, the electrode current collector 110 may form the first metal layer 113 and the second metal layer 114 thinly on both surfaces thereof, so that the risk of a shorting due to a metal burr or the like may be low in the event of breaking.

Additionally, the polymer layer 112 may be formed of a material including, for example, polyethylene terephthalate (PET), polyimide (PI), or polyethylenenaphthalate (PEN).

Meanwhile, the thickness of the first metal layer 113 may be, for example, the same as the thickness of the second metal layer 114.

Meanwhile, the electrode current collector 110 may be composed of a body 117 having an electrode active material coated on the outer surface and an electrode tab 111 extending from the body 117.

Meanwhile, referring to FIGS. 1 and 2, the electrode tabs 111 of the electrode current collectors 110 provided on each of the multiple electrodes 130 may form a tab stack T collected together.

In this case, the tab stack T may be in a form where the ends of the electrode tabs 111 are collected together and welded.

Referring to FIGS. 1 and 2, the electrode lead 200 may be electrically connected to the electrode stack 100 to electrically connect the electrode stack 100 to an external device.

The end of the electrode lead 200 may be welded and fixed to the outer surface of the metal clip 300. In this case, the electrode lead 200 and the metal clip 300 may be welded to form a welded portion P.

The metal clip 300 may surround the end of the tab stack T. In this case, the electrode stack 100 and the electrode lead 200 may be electrically connected through connection between one side of the metal clip 300 and the electrode lead 200.

The metal clip 300 is provided in a form in which both sides 301, 303 are bent with respect to the center portion 302, and the both sides 301, 303 of the metal clip 300 may be in respective contact with the metal layers 115 of the electrode current collector 110 located on both of the outermost sides in the stacking direction D of the tab stack T.

Here, the metal clip 300 may be provided in a folded form in a " 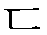 " shape.

In this case, one side of the metal clip 300 and the electrode lead 200 may be connected.

Meanwhile, the metal clip 300 and the metal layer 115 of the electrode current collector 110 may include the same metal material.

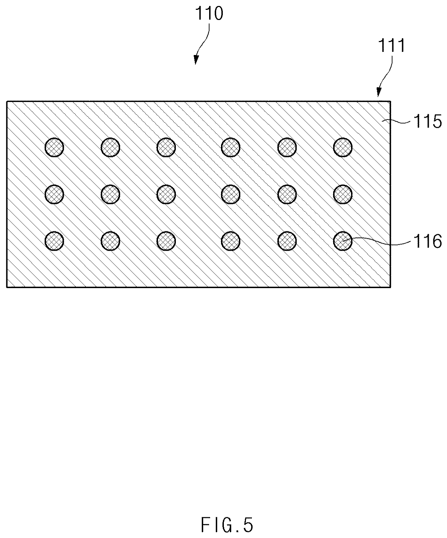

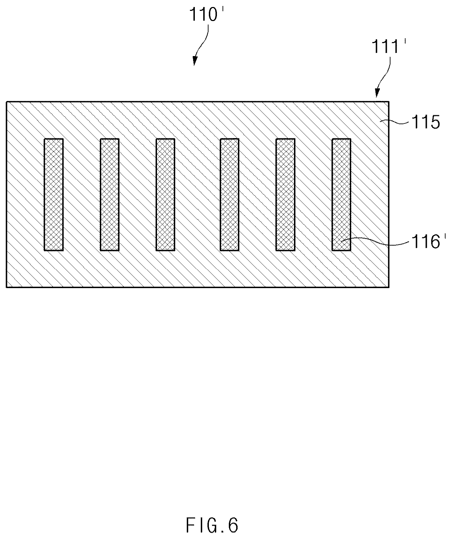

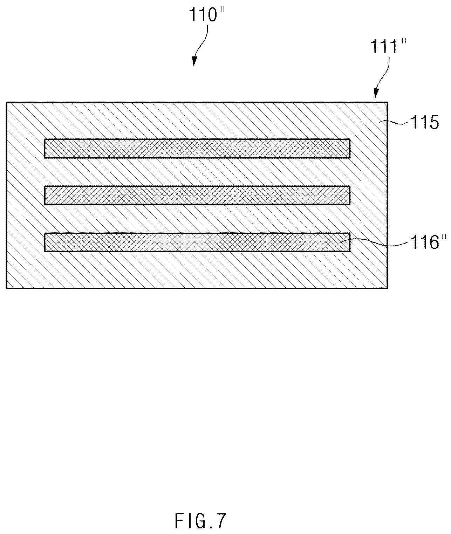

FIG. 5 is a cross-sectional view showing a first example of an electrode current collector in an electrode assembly according to an embodiment of the present disclosure, FIG. 6 is a cross-sectional view showing a second example of an electrode current collector according to an embodiment of the present disclosure, and FIG. 7 is a cross-sectional view showing a third example of an electrode current collector according to an embodiment of the present disclosure.

Referring to FIG. 2 and FIGS. 5 to 7, protrusions 116 protruding toward the metal clip 300 may be formed on the metal layer 115 of the electrode current collector 110 located at the outermost side of the tab stack T. Accordingly, the electrical contact between the metal layer 115 and the metal clip 300 may be increased.

The protrusions 116 may be formed in the form of multiple dots or lines along the surface of the metal layer 115 facing the metal clip 300. Here, the protrusion 116 may be formed in the form of multiple circular dots or in the form of parallel lines provided in multiples at regular intervals.

Specifically, referring to FIG. 5, the protrusions 116 may be formed in the form of multiple circular dots as a first example. In this case, the protrusions 116 in the form of circular dots may be arranged in multiple columns and rows along the outer surface of the metal layer 115.

Additionally, referring to FIG. 6, the protrusions 116' may be formed in the form of parallel lines arranged in multiple columns at regular intervals as a second example. In this case, the protrusions 116' may be formed along the outer surface of the metal layer 115 located on the electrode tab 111' of the electrode current collector 110'.

In addition, referring to FIG. 7, the protrusions 116" may be formed in the form of parallel lines arranged in multiple rows at regular intervals as a third example. In this case, the protrusions 116" may be formed along the outer surface of the metal layer 115 located on the electrode tab 111" of the electrode current collector 110".

Referring to FIGS. 1 and 2, in the electrode assembly 10 according to an embodiment of the present disclosure configured as described above, the end of the tab stack T in which the electrode tabs 111 of the electrode current collector 110 having metal layers 115 laminated on both surfaces of the polymer layer 112 are collected together is surrounded by the metal clip 300, and the electrode lead 200 is connected to the metal clip 300, so that there is an effect of significantly improving weldability between the electrode tab 111 and the electrode lead 200.

### Secondary battery according to embodiment

Hereinafter, a secondary battery according to an embodiment of the present disclosure will be described.

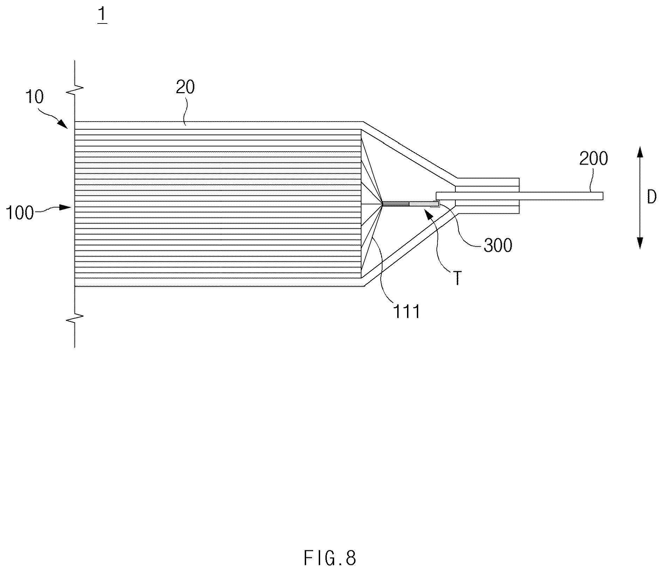

FIG. 8 is a cross-sectional view showing a secondary battery including an electrode assembly according to an embodiment of the present disclosure.

Referring to FIGS. 1 to 3 and FIG. 8, a secondary battery 1 according to an embodiment of the present disclosure includes an electrode assembly 10 and a battery case 20 accommodating the electrode assembly 10, wherein the electrode assembly 10 includes an electrode stack 100 in which multiple electrodes 130 and separators 140 are alternately stacked, and an electrode lead 200 electrically connected to the electrode stack 100, wherein the electrode 130 includes an electrode current collector 110 including an electrode tab 111 extending at an end, and the electrode current collector 110 includes a polymer layer 112 and metal layers 115 laminated on each of both surfaces of the polymer layer 112 in the stacking direction D, wherein the electrode tabs 111 of the electrode current collectors 110 provided on each of the multiple electrodes 130 are collected together to form a tab stack T, and the electrode assembly 10 further includes a metal clip 300 surrounding the end of the tab stack T, wherein the electrode lead 200 is electrically connected to the electrode stack 100 by being connected to one side of the metal clip 300.

The secondary battery 1 according to an embodiment of the present disclosure relates to a secondary battery 1 including the electrode assembly 10 according to the above-described embodiment. Therefore, the present disclosure will omit or briefly describe any content overlapping with the above-described embodiment.

More specifically, the battery case 20 has a receiving portion formed therein to accommodate the electrode assembly 10. Here, the battery case 20 accommodates the electrode stack 100, and the electrode lead 200 may have one side positioned inside the battery case 20 to be connected to the electrode stack 100 and the other side extending to the outside of the battery case 20.

The electrode stack 100 is a power generating element that can be charged and discharged, in which multiple electrodes 130 and separators 140 are alternately stacked.

The electrode 130 includes an electrode current collector 110 including an electrode tab 111 extending at an end.

The electrode tabs 111 of the electrode current collectors 110 provided on each of the multiple electrodes 130 may form a tab stack T collected together.

The metal clip 300 may surround the end of the tab stack T. In this case, the electrode stack 100 and the electrode lead 200 may be electrically connected through connection between one side of the metal clip 300 and the electrode lead 200.

The metal clip 300 is provided in a form in which both sides 301, 303 are bent with respect to the center portion 302, and the both sides 301, 303 of the metal clip 300 may be in respective contact with the metal layers 115 of the electrode current collector 110 located on both of the outermost sides in the stacking direction D of the tab stack T.

### Method for manufacturing electrode assembly according to embodiment

Hereinafter, a method for manufacturing an electrode assembly according to an embodiment of the present disclosure will be described.

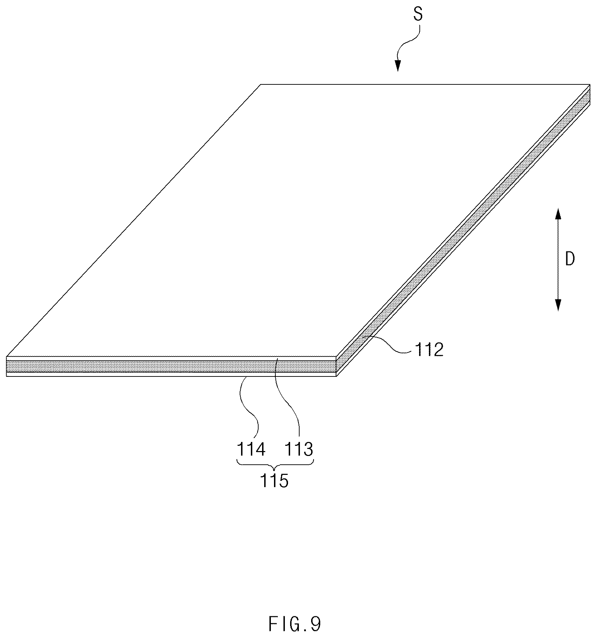

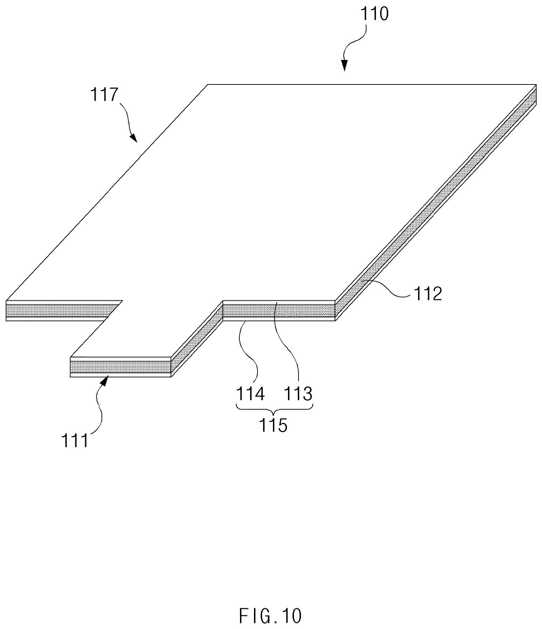

FIG. 9 is a perspective view showing a lamination process in a method for manufacturing an electrode assembly according to an embodiment of the present disclosure, and FIG. 10 is a perspective view showing a tab formation process in a method for manufacturing an electrode assembly according to an embodiment of the present disclosure.

Referring to FIGS. 1, 2, 9, and 10, a method for manufacturing the electrode assembly according to an embodiment of the present disclosure includes a current collector formation step of forming an electrode current collector 110, including a lamination process for laminating metal layers 115 on both surfaces of a polymer layer 112 to form a current collector stack S, and a tab formation process for notching an end portion of the current collector stack S to form an electrode tab 111, an electrode stack formation step of alternately stacking multiple electrodes 130 including the electrode current collector 110 and separators 140 to form an electrode stack 100, a tab collection step of forming a tab stack T by collecting the electrode tabs 111 of the electrode current collectors 110 provided on each of the multiple electrodes 130, a lead connection step of connecting an electrode lead 200 to one surface F1 of a metal sheet 300', and a folding step of forming a metal clip 300 by folding the end of the tab stack T so that the other surface F2 of the metal sheet 300' surrounds it. Additionally, the method for manufacturing the electrode assembly according to an embodiment of the present disclosure may further include a seating step, a stamping step, and a protrusion formation step.

The method for manufacturing the electrode assembly according to an embodiment of the present disclosure relates to a method for manufacturing the electrode assembly for manufacturing the electrode assembly 10 according to an embodiment of the present disclosure described above and the electrode assembly 10 included in a secondary battery according to an embodiment of the present disclosure.

Therefore, the embodiment of the method for manufacturing the electrode assembly according to an embodiment of the present disclosure is to be described by omitting or briefly describing the content overlapping with the embodiments of the present disclosure described above and focusing on differences.

More specifically, the current collector formation step includes a lamination process and a tab formation process.

Referring to FIG. 9, in the lamination process, a current collector stack S is formed by laminating metal layers 115 on both surfaces of a polymer layer 112.

In the lamination process, the metal layer 115 may be formed by depositing metal on both surfaces of the polymer layer 112 in the stacking direction D.

In the lamination process, a first metal layer 113 may be laminated on one surface of the polymer layer 112 in the stacking direction D and a second metal layer 114 may be laminated on the other surface F2 thereof.

Here, the polymer layer 112 is a layer including a polymer material, and the metal layers 115 are layers including a metal material.

Referring to FIG. 10, in the tab formation process, an electrode tab 111 is formed by notching an end portion of the stack.

That is, in the tab formation process, the electrode tab 111 may be formed in a protruding shape by cutting one side of the current collector stack S in which the first metal layer 113 and the second metal layer 114 are laminated on both surfaces of the polymer layer 112.

Additionally, the tab formation process may include notching so that the electrode tab 111 is formed in the current collector stack S using a punch die or laser.

Referring to FIG. 4, in the electrode stack formation step, an electrode stack 100 is formed by alternately stacking multiple electrodes 130 including an electrode current collector 110 and separators 140.

In this case, in the electrode stack formation step, a positive electrode, a separator 140, and a negative electrode may be alternately stacked. Here, in the electrode stack formation step, the separator 140 may be located at the outermost side in the stacking direction D.

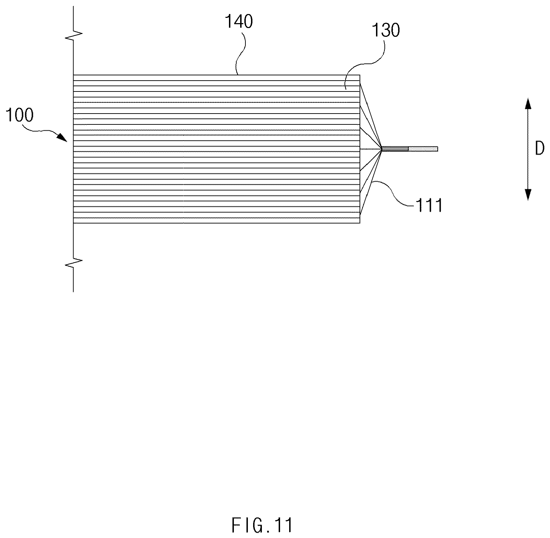

FIG. 11 is a cross-sectional view showing a tab collection step in a method for manufacturing an electrode assembly according to an embodiment of the present disclosure.

Referring to FIG. 11, in the tab collection step, the electrode tabs 111 of the electrode current collector 110 provided in each of the multiple electrodes 130 are collected to form a tab stack T.

That is, in the tab collection step, the tab stack T may be formed by pressing the ends of the electrode tabs 111 extending from the electrode current collector 110 of the electrode 130 to be collected together and welding.

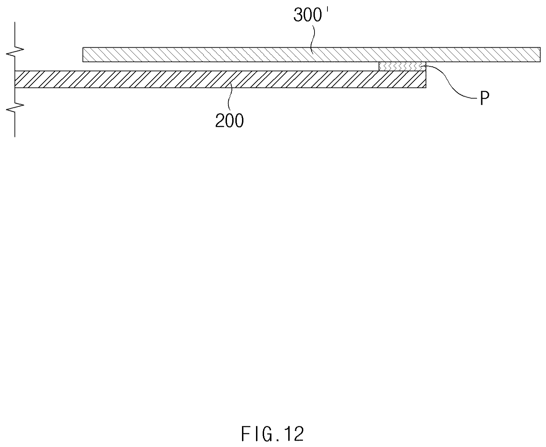

FIG. 12 is a cross-sectional view showing a lead connection step in a method for manufacturing an electrode assembly according to an embodiment of the present disclosure.

Referring to FIG. 12, in the lead connection step, the electrode lead 200 is connected to one surface F1 of the metal sheet 300'.

In the lead connection step, the electrode lead 200 may be connected to the metal sheet 300' by welding.

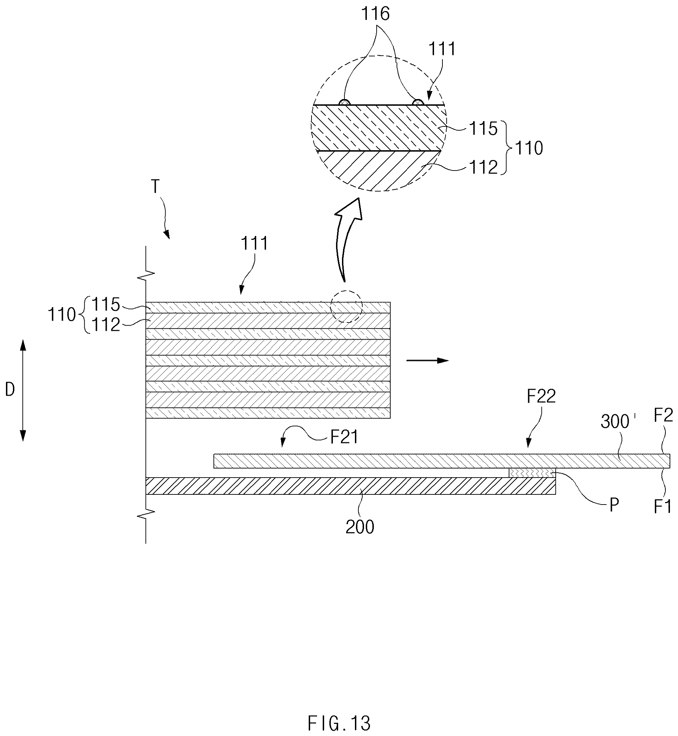

FIG. 13 is a cross-sectional view showing a seating step in a method for manufacturing an electrode assembly according to an embodiment of the present disclosure.

Referring to FIG. 13, in the seating step, the tab stack T may be seated on the first part F21 on the other surface F2 of the metal sheet 300' after the lead connection step.

Referring to FIG. 13, in the protrusion formation step, the protrusions 116 protruding toward the metal clip 300 may be formed on the metal layer 115 of the electrode current collector 110 located at the outermost side of the tab stack T in the stacking direction D before the folding step.

In the protrusion formation step, the protrusions 116 may be formed in the form of multiple dots or lines on the metal layer 115 along the surface facing the metal clip 300.

In the protrusion formation step, as an example, the protrusions 116 may be formed by depositing metal on a surface of the metal layer 115 facing the metal clip 300.

In the protrusion formation step, as another example, the protrusions 116 may be formed by positioning a metal strip in the form of a dot or line between the metal layer 115 and the metal sheet 300'.

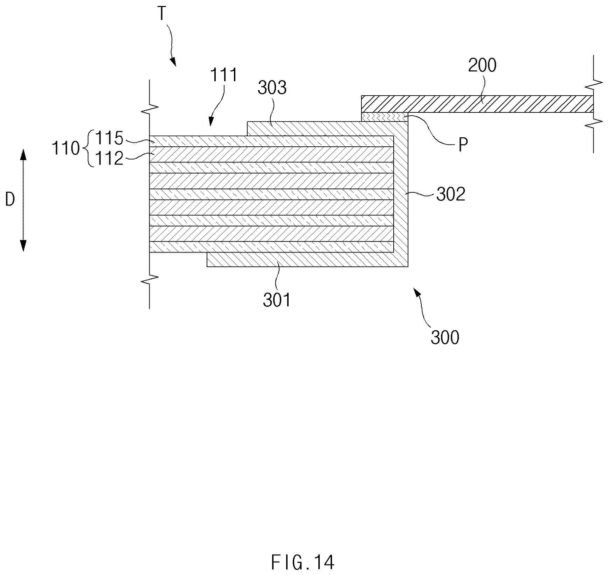

FIG. 14 is a cross-sectional view showing a folding step in a method for manufacturing an electrode assembly according to an embodiment of the present disclosure.

Referring to FIG. 14, in the folding step, a metal clip 300 is formed by folding the metal sheet so that the other surface F2 of the metal sheet 300' surrounds the end of the tab stack T.

Additionally, in the folding step, the end of the electrode tab 111 may be surrounded with a second part F22 on the other surface F2 of the metal sheet 300' after the seating step.

In addition, in the folding step, a part facing the upper surface of the tab stack T in the second part F22 of the metal sheet 300' to be folded may be folded to have a length L of 5 to 50 mm.

The length L of the part that faces the upper surface of the tab stack T in the second part F22 of the metal sheet 300' is formed to be the lower limit value of 5 mm or more, so that electrical contact is effectively possible, and it is formed to be the upper limit value of 50 mm or less, so that the metal sheet 300' may be easily folded.

And, in the folding step, both sides of the metal sheet 300' may be bent to be in respective contact with the metal layers 115 of the electrode current collectors 110 located on both of the outermost sides in the stacking direction D of the tab stack T.

Meanwhile, the method for manufacturing the electrode assembly according to an embodiment of the present disclosure may further include a fixing step of welding and fixing both sides of the metal sheet 300' and the metal layers 115 of the electrode current collector 110 after the folding step.

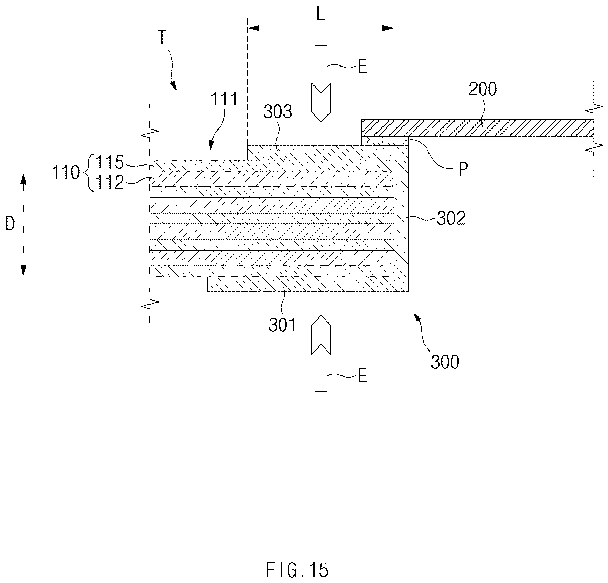

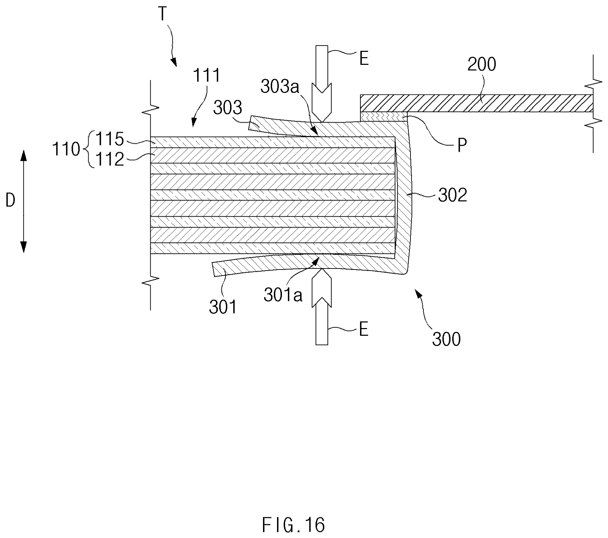

FIG. 15 is a cross-sectional view showing an example of a stamping step in a method for manufacturing an electrode assembly according to an embodiment of the present disclosure, and FIG. 16 is a cross-sectional view showing another example of a stamping step in a method for manufacturing an electrode assembly according to an embodiment of the present disclosure.

Referring to FIGS. 15 and 16, in the stamping step after the folding step, the metal clip 300 may be fixed to the tab stack T by stamping both of the outermost surfaces of the tab stack T in the stacking direction D.

Here, in the stamping step, the metal clip 300 may be fixed to the tab stack T by pressing both sides 301, 303 of the metal clip 300 from both sides in the stacking direction through the stamping means E.

Meanwhile, referring to FIG. 15, as an example in the stamping step, both sides 301, 303 of the metal clip 30 may be formed parallel to the outermost surface of the tab stack T.

And, referring to FIG. 16, as another example in the stamping step, convex portions 301a, 302b that are convex in the direction of the tab stack T may be formed on both sides 301, 303 of the metal clip 300.

The present disclosure has been hereinabove described in detail through specific embodiments, but this is intended to specifically describe the present disclosure, and the present disclosure is not limited thereto. It will be said that various modifications and variations are possible by those having ordinary skill in the art within the technical ideas of the present disclosure.

Additionally, the specific scope of protection of the present disclosure will be made clear by the appended claims of the patent.

### [List of Reference Numerals]

1: Secondary battery
10: Electrode assembly
20: Battery case
100: Electrode stack
110, 110', 110": Electrode current collector
110a: Positive electrode current collector
110b: Negative electrode current collector
111, 111', 111": Electrode tab
112: Polymer layer
113: First metal layer
114: Second metal layer
115: Metal layer
116, 116', 116": Protrusion
117: Body
120: Electrode active material
120a: Positive electrode active material
120b: Negative electrode active material
130: Electrode
130a: Positive electrode
130b: Negative electrode
140: Separator
200: Electrode lead
300: Metal clip
300': Metal sheet
D: Stacking direction
E: Stamping means
P: Welded portion
S: Current collector stack
T: Tab stack

## Claims

1. An electrode assembly, comprising:
an electrode stack in which multiple electrodes and separators are alternately stacked; and an electrode lead electrically connected to the electrode stack,
wherein the electrode comprises an electrode current collector comprising an electrode tab extending at an end, and
the electrode current collector comprises a polymer layer and metal layers laminated on each of both surfaces of the polymer layer in the stacking direction,
wherein the electrode tabs of the electrode current collectors provided on each of the multiple electrodes are collected together to form a tab stack, and
the electrode assembly further comprises a metal clip surrounding the end of the tab stack,
wherein the electrode lead is electrically connected to the electrode stack by being connected to one side of the metal clip.

2. The electrode assembly according to claim 1,
wherein protrusions protruding toward the metal clip are formed on the metal layer of the electrode current collector located at the outermost side of the tab stack.

3. The electrode assembly according to claim 2,
wherein the protrusions are formed in the form of multiple dots or lines along the surface of the metal layer facing the metal clip.

4. The electrode assembly according to claim 3,
wherein the protrusions are formed in the form of multiple circular dots or parallel lines provided in multiples at regular intervals.

5. The electrode assembly according to claim 1,
wherein the metal layer of the electrode current collector and the metal clip comprise the same metal material.

6. The electrode assembly according to claim 1,
wherein the metal clip is provided in a folded form in a " 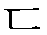 " shape.

7. The electrode assembly according to claim 1,
wherein the metal clip is provided in a form in which both sides are bent with respect to the center portion, and
both sides of the metal clip are in respective contact with the metal layers of the electrode current collector located on both of the outermost sides in the stacking direction of the tab stack.

8. A secondary battery, comprising:
an electrode assembly and a battery case accommodating the electrode assembly,
wherein the electrode assembly comprises an electrode stack in which multiple electrodes and separators are alternately stacked; and an electrode lead electrically connected to the electrode stack,
wherein the electrode comprises an electrode current collector comprising an electrode tab extending at an end, and
the electrode current collector comprises a polymer layer and metal layers laminated on each of both surfaces of the polymer layer in the stacking direction,
wherein the electrode tabs of the electrode current collectors provided on each of the multiple electrodes are collected together to form a tab stack, and
the electrode assembly further comprises a metal clip surrounding the end of the tab stack,
wherein the electrode lead is electrically connected to the electrode stack by being connected to one side of the metal clip.

9. A method for manufacturing the electrode assembly, comprising:
a current collector formation step of forming an electrode current collector, comprising a lamination process for laminating metal layers on both surfaces of a polymer layer to form a current collector stack; and a tab formation process for notching an end portion of the current collector stack to form an electrode tab;
an electrode stack formation step of alternately stacking multiple electrodes comprising the electrode current collector and separators to form an electrode stack;
a tab collection step of forming a tab stack by collecting the electrode tabs of the electrode current collectors provided on each of the multiple electrodes;
a lead connection step of connecting an electrode lead to one surface of a metal sheet; and
a folding step of forming a metal clip by folding the metal sheet so that the other surface of the metal sheet surrounds the end of the tab stack.

10. The method for manufacturing the electrode assembly according to claim 9,
wherein in the lead connection step, the electrode lead is welded and connected to the metal sheet, and
after the lead connection step, a seating step of seating the tab stack on a first part on the other surface of the metal sheet is further comprised,
wherein in the folding step, the end of the electrode tab is surrounded with a second part on the other surface of the metal sheet after the seating step.

11. The method for manufacturing the electrode assembly according to claim 10, further comprising:
after the folding step,
a stamping step of stamping both sides of the metal clip located on both of the outermost surfaces of the tab stack in the stacking direction to fix the metal clip to the tab stack.

12. The method for manufacturing the electrode assembly according to claim 10, further comprising:
before the folding step,
a protrusion formation step of forming protrusions that protrude toward the metal clip on the metal layer of the electrode current collector located on the outermost side of the tab stack in the stacking direction.

13. The method for manufacturing the electrode assembly according to claim 12,
wherein in the protrusion formation step, the protrusions are formed in the form of multiple dots or lines on the metal layer along the surface facing the metal clip.

14. The method for manufacturing the electrode assembly according to claim 12,
wherein in the lamination process, the metal layer is formed by depositing metal on both surfaces of the polymer layer in the stacking direction, and
in the protrusion formation step, the protrusions are formed by depositing metal on a surface of the metal layer facing the metal clip.

15. The method for manufacturing the electrode assembly according to claim 12,
wherein in the protrusion formation step, the protrusions are formed by positioning a metal strip in the form of a dot or line between the metal layer and the metal sheet, and then the folding step is performed.

16. The method for manufacturing the electrode assembly according to claim 10,
wherein in the folding step,
a part facing the upper surface of the tab stack in the second part of the metal sheet to be folded is folded to have a length of 5 to 50 mm.

17. The method for manufacturing the electrode assembly according to claim 9,
wherein in the folding step,
both sides of the metal sheet are bent to be in respective contact with the metal layers of the electrode current collectors located on both of the outermost sides in the stacking direction of the tab stack.
